# EUROPEAN PATENT SPECIFICATION

(11) **EP 3 418 122 B1**
(45) Date of publication and mention of the grant of the patent: **15.07.2020**
(21) Application number: 17812907.8
(22) Date of filing: 24.01.2017
(51) Int. Cl.: B60R 1/00, H04N 7/18, G06T 3/40, G06K 9/00, G06T 7/20, G06T 7/246

(54) **POSITION CHANGE DETERMINATION DEVICE, OVERHEAD VIEW IMAGE GENERATION DEVICE, OVERHEAD VIEW IMAGE GENERATION SYSTEM, POSITION CHANGE DETERMINATION METHOD, AND PROGRAM**
POSITIONSÄNDERUNGSBESTIMMUNGSVORRICHTUNG, ÜBERKOPFBILDERZEUGUNGSVORRICHTUNG, ÜBERKOPFBILDERZEUGUNGSSYSTEM, POSITIONSÄNDERUNGSBESTIMMUNGSVERFAHREN UND PROGRAMM
DISPOSITIF DE DÉTERMINATION DE CHANGEMENT DE POSITION, DISPOSITIF DE GÉNÉRATION D'IMAGE DE VUE AÉRIENNE, SYSTÈME DE GÉNÉRATION D'IMAGE DE VUE AÉRIENNE, PROCÉDÉ DE DÉTERMINATION DE CHANGEMENT DE POSITION, ET PROGRAMME

(30) Priority: 15.06.2016 JP 2016118533
(43) Date of publication of application: 26.12.2018
(73) Proprietor: JVCKENWOOD Corporation, Yokohama-shi, Kanagawa 2210022 (JP)
(72) Inventor: NAGAI, Katsuyuki, Yokohama-shi Kanagawa 221-0022 (JP); YAMADA, Yasuo, Yokohama-shi Kanagawa 221-0022 (JP); MURATA, Toshitaka, Yokohama-shi Kanagawa 221-0022 (JP); HAYASHI, Keita, Yokohama-shi Kanagawa 221-0022 (JP)
(74) Representative: Schmidbauer, Andreas Konrad
(86) International application number: PCT/JP2017/002368
(87) International publication number: WO 2017/216998

(56) References cited:
- EP-A1- 2 597 614
- WO-A1-2015/029934
- WO-A1-2016/052505
- WO-A1-2016/052505
- JP-A- 2003 009 141
- JP-A- 2003 178 309
- JP-A- 2004 198 211
- JP-A- 2009 017 462
- JP-A- 2009 253 571
- JP-A- 2010 233 080
- JP-A- 2010 233 080
- JP-A- 2012 046 081
- JP-A- 2013 186 245

## Description

### Field

The present invention relates to a posture-change determining device, a bird's-eye-view image generating device, a bird's-eye-view image generating system, a posture-change determining method, and a program.

### Background

A technique of capturing images around a vehicle with cameras mounted around a vehicle, and of displaying captured images subjected to eye point conversion on a monitor as a bird's eye view has been known (for example, refer to JP 2009-253571 A). This technique achieves acquisition of a monitor image with favorable image quality even with variation in height or inclination change of a vehicle on which an on-vehicle camera is mounted.

WO 2015-029934 A discloses a camera calibration device which is provided with: an image conversion unit which converts images captured by respective cameras on the basis of a projection matrix for conversion into a bird's eye viewpoint on the basis of the initial parameters of the respective cameras to thereby generate converted images; an error evaluation unit which calculates an error between a converted image by a reference camera selected from a plurality of cameras and a converted image by a camera other than the reference camera among the converted images; a projection matrix updating unit which, on the basis of the error, updates the projection matrix such that images of a common image capture region by the respective cameras match; and a camera parameter calculation unit which, on the basis of the updated projection matrix, calculates a camera parameter including an external parameter relating to the posture of each of the cameras with respect to the ground.

JP 2009-253571 A discloses a monitor video generation device for a vehicle which is provided with: on-vehicle rear cameras, which image the surrounding of the vehicle; a monitor video image generation controller which performs viewpoint conversion of camera video images viewed from the on-vehicle rear cameras into video images viewed from a predetermined virtual viewpoint to generate monitor video signals; and a monitor which displays monitor images. In the monitor video generation device for the vehicle, the monitor video image generation controller is used as a means for calculating an external parameter which is information of relative attachment position to a wheel ground plane of the on-vehicle rear cameras and performing the viewpoint conversion for keeping positional relation between a camera viewpoint and the virtual viewpoint constant following the change of the calculated external parameter.

EP 2 597 614 A discloses a calibration method for an automotive camera system which includes: recognizing a recognition target object including a preset straight line portion, from an image taken by each of image taking units, and extracting feature points of the recognition target object from the image; projecting the feature points onto a virtual spherical surface, estimating intrinsic parameters of the image taking units on the basis of a shape of a feature point sequence formed on the virtual spherical surface, and calibrating the estimated intrinsic parameters; and calculating an overhead point of view of the image on the basis of the feature points, estimating extrinsic parameters of the image taking units on the basis of the calculated overhead point of view, and calibrating the estimated extrinsic parameters.

JP 2010-233080 A discloses a driving support device which includes: a reference posture specifying portion which specifies a reference posture to which a posture of the vehicle is referred; an image acquiring portion that acquires image data of the vicinity of the vehicle; a photographic posture specifying portion that specifies a photographic posture being a posture of the vehicle when the image acquiring portion acquires the image data by photography; a deciding portion that decides whether the image data that the image acquiring portion acquires are usable on the basis of a difference between the reference posture that the reference posture specifying portion specifies and the photographic posture that the photographic posture specifying portion specifies; a bird's-eye view image creating portion which creates a bird's-eye view image of an area including the vehicle using only image data that the deciding portion decides to be usable; and a display which displays the bird's-eye view image that the bird's-eye view image creating portion creates.

### Summary

### Technical Problem

The technique described in JP 2009-253571 A requires a sensor that detects a sinking amount of a suspension to be arranged at each wheel, to measure a change in height and a change in inclination of a vehicle. Therefore, a technique of appropriately determining a posture change of a vehicle without using a sensor, supporting also a posture change of the vehicle that is not reflected in sinking of suspensions and the like, and a technique of generating a bird's-eye view image coping with a change of posture of a vehicle have been demanded.

The present invention is achieved in view of the above challenge, and it is an object to provide a technique, easily applicable to a vehicle without using a sensor, of determining a change of posture of a vehicle appropriately when the posture of the vehicle changes and of providing a bird's-eye view image around the vehicle corrected appropriately based on a result of the determination.

### Solution to Problem

In accordance with the present invention, a posture-change determining device, a corresponding method and a program as set forth in the appended claims are provided. In particular, to solve the above challenge and achieve the object, a posture-change determining device according to the present invention includes an image acquiring unit that acquires a plurality of periphery images in which a periphery of a vehicle is imaged by a plurality of imaging devices that are provided in the vehicle, and a posture-change determining unit that determines whether a posture of the vehicle has changed based on the periphery images that are acquired by the image acquiring unit.

A bird's-eye-view-image generating device according to the present invention includes the posture-change determining device described above, and a bird's-eye-view-image generating unit that generates a bird's-eye view image obtained by combining a plurality of periphery images acquired by the image acquiring unit subjected to eye point conversion so that an image looking the vehicle down from above is obtained. The bird's-eye-view-image generating unit generates a bird's-eye view image that is corrected according to a change of a posture of the vehicle based on a determination result of the posture-change determining unit.

A bird's-eye-view-image generating system according to the present invention includes the bird's-eye-view-image generating device described above, and an imaging device that is arranged in the vehicle and that images a periphery of the vehicle and provides a periphery image to the image acquiring unit.

A posture-change determining method according to the present invention, includes an image acquiring step of acquiring a plurality of periphery images in which a periphery of a vehicle is imaged by a plurality of imaging devices that are provided in the vehicle, and a determining step of determining whether a posture of the vehicle has changed based on the periphery images that are acquired at the image acquiring step.

A program that causes a computer to operate as a posture-change determining device is disclosed. The program according to the present invention includes an image acquiring step of acquiring a plurality of periphery images in which a periphery of a vehicle is imaged by a plurality of imaging devices that are provided in the vehicle, and a determining step of determining whether a posture of the vehicle has changed based on the periphery images that are acquired at the image acquiring step. Advantageous Effects of Invention

According to the present invention, effects are produced that it is applicable easily to a vehicle without using a sensor, and that appropriate determination of a change of posture of the vehicle when the posture of the vehicle changes and provision of a bird's-eye view image around the vehicle appropriately corrected based on a result of determination are enabled.

### Brief Description of Drawings

FIG. 1 is a block diagram illustrating a configuration example of a bird's-eye-view-image generating system according to a first embodiment.
FIG. 2 illustrates a bird's-eye view image that is generated by the bird's-eye-view-image generating system according to the first embodiment.
FIG. 3 is a plan view explaining a posture of a vehicle that uses the bird's-eye-view-image generating system according to the first embodiment.
FIG. 4 is a side view explaining a posture of a vehicle that uses the bird's-eye-view-image generating system according to the first embodiment.
FIG. 5 is a side view explaining a posture of a vehicle that uses the bird's-eye-view-image generating system according to the first embodiment.
FIG. 6 is a schematic diagram explaining a posture of a forward-periphery imaging camera of the bird's-eye-view-image generating system according to the first embodiment.
FIG. 7 is a flowchart illustrating a flow of processing by a posture-change determining device and a bird's-eye-view-image generating device of the bird's-eye-view-image generating system according to the first embodiment.
FIG. 8 illustrates one example of an image captured by the forward-periphery imaging camera of the bird's-eye-view-image generating system according to the first embodiment.
FIG. 9 illustrates another example of an image captured by the forward-periphery imaging camera of the bird's-eye-view-image generating system according to the first embodiment.
FIG. 10 illustrates another example of an image captured by the forward-periphery imaging camera of the bird's-eye-view-image generating system according to the first embodiment.
FIG. 11 illustrates another example of an image captured by the forward-periphery imaging camera of the bird's-eye-view-image generating system according to the first embodiment.
FIG. 12 is a schematic diagram explaining a movement vector.
FIG. 13 illustrates a conventional bird's-eye view image.

### Description of Embodiments

Embodiments of a posture-change determining device, a bird's-eye-view-image generating device, a bird's-eye-view-image generating system, a posture-change determining method, and a program according to the present invention are explained in detail below, referring to the accompanying drawings. The following embodiments are not intended to limit the present invention.

### [First Embodiment]

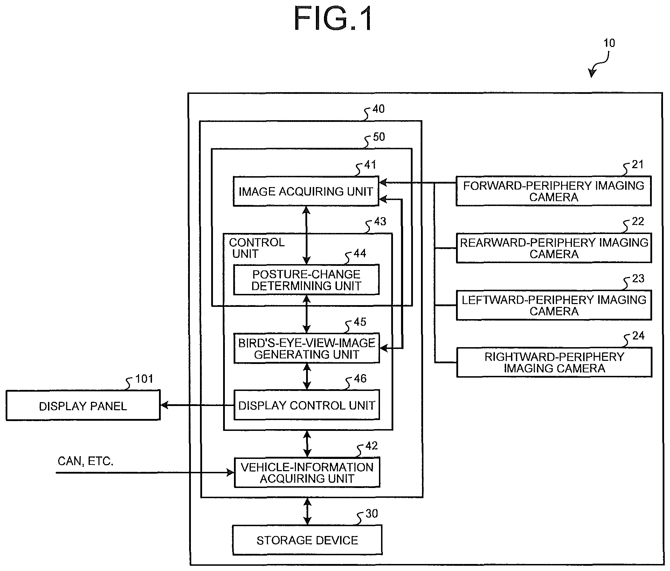

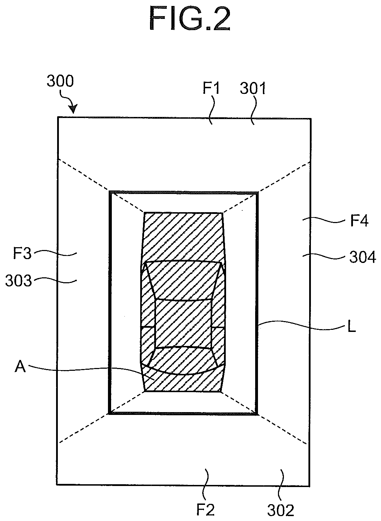

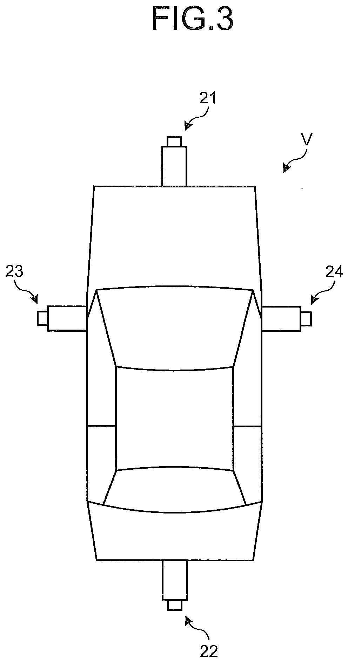

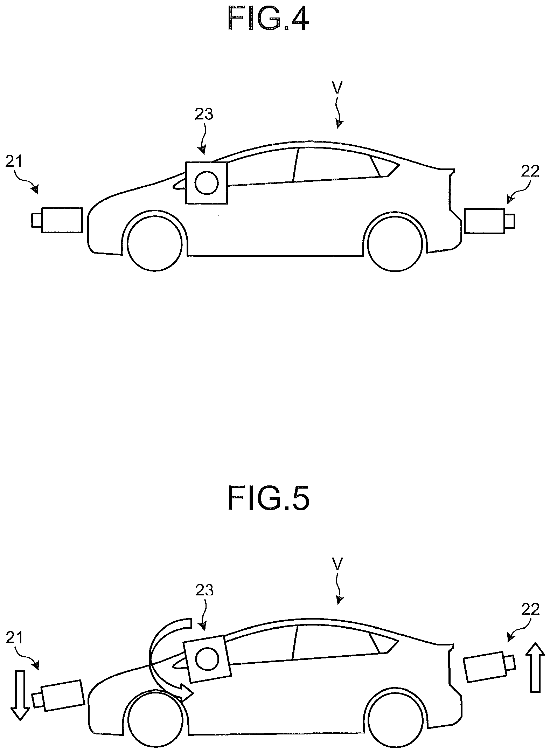

FIG. 1 is a block diagram illustrating a configuration example of a bird's-eye-view-image generating system according to a first embodiment. FIG. 2 illustrates a bird's-eye view image that is generated by the bird's-eye-view-image generating system according to the first embodiment. FIG. 3 is a plan view explaining a posture of a vehicle that uses the bird's-eye-view-image generating system according to the first embodiment. FIG. 4 is a side view explaining a posture of a vehicle that uses the bird's-eye-view-image generating system according to the first embodiment. FIG. 5 is a side view explaining a posture of a vehicle that uses the bird's-eye-view-image generating system according to the first embodiment. A bird's-eye-view-image generating system 10 generates a composite image of periphery of a vehicle V (refer to FIG. 3 or FIG. 5). In the present embodiment, the bird's-eye-view-image generating system 10 generates a bird's-eye view image 300 (refer to FIG. 2) of the vehicle V. In the present embodiment, a bird's-eye view image generated by the bird's-eye-view-image generating system 10 is explained as the bird's-eye view image 300 that includes a virtual own-vehicle image A expressing the vehicle V, looking the vehicle V down from above as illustrated in FIG. 2. The present embodiment is applicable to any of a state of displaying the bird's-eye view image 300 when the vehicle V is traveling forward or backward and a state of displaying the bird's-eye view image 300 during a stop when the vehicle speed is zero.

The bird's-eye-view-image generating system 10 is explained by using FIG. 1. When determining that a posture of the vehicle V has changed, the bird's-eye-view-image generating system 10 generates the bird's-eye view image 300 corrected according to the change in the posture of the vehicle V. Besides one that has been installed in the vehicle V, the bird's-eye-view-image generating system 10 can be a portable device that can be used in the vehicle V also.

The bird's-eye-view-image generating system 10 is mounted on the vehicle V, and is connected to a display panel 101 that displays images based on processing by a display control unit 46 so as to be able to transmit an image signal thereto. The bird's-eye-view-image generating system 10 is connected such that data related to the vehicle V can be received using a CAN (controller area network) and the like from the vehicle V. In the present embodiment, the display panel 101 is not included in the bird's-eye-view-image generating system 10, but can be included therein.

The display panel 101 is a display including, for example, a liquid crystal display (LCD) and an organic EL (electro-luminescence) display. The display panel 101 displays the bird's-eye view image 300 based on an image signal that is output from the display control unit 46 of a bird's-eye-view-image generating device 40 of the bird's-eye-view-image generating system 10. The display panel 101 can be one dedicated to the bird's-eye-view-image generating system 10, or can be one shared with another system including, for example, a navigation system. The display panel 101 is arranged at a position that is easily seen by a viewer including a driver.

The bird's-eye-view-image generating system 10 includes a forward-periphery imaging camera (imaging device) 21, a rearward-periphery imaging camera (imaging device) 22, a leftward-periphery imaging camera (imaging device) 23, a rightward-periphery imaging camera (imaging device) 24, a storage device 30, the bird's-eye-view-image generating device 40, and a posture-change determining device 50.

The forward-periphery imaging camera 21, the rearward-periphery imaging camera 22, the leftward-periphery imaging camera 23, and the rightward-periphery imaging camera 24 (hereinafter, "the periphery imaging camera 21 to the periphery imaging camera 24") are explained, using FIG. 3 to FIG. 5. In FIG. 3 to FIG. 5, the forward-periphery imaging camera 21, the leftward-periphery imaging camera 23, and the rightward-periphery imaging camera 24 are illustrated in an emphasized manner. While the respective cameras in FIG. 3 to FIG. 5 are illustrated to direct toward the horizontal direction to facilitate explanation, the cameras are directed to be able to image mainly a lower part of the periphery of the vehicle V in respective directions in an actual situation.

The forward-periphery imaging camera 21 is arranged on a front of the vehicle V and images mainly a frontward periphery of the vehicle V. The forward-periphery imaging camera 21 is fixed to the vehicle V. In other words, the position and the posture of the forward-periphery imaging camera 21 relative to the vehicle V are fixed. Therefore, when the posture of the vehicle V relative to a contact ground surface including a surface of the ground and a surface of a floor changes, the posture of the forward-periphery imaging camera 21 relative to the contact ground surface changes. In FIG. 4, a vehicle axis of the vehicle V does not tilt to the contact ground surface, but extends along a direction parallel thereto. In this case, an optical axis of the forward-periphery imaging camera 21 extends along a direction parallel to the contact ground surface. The state illustrated in FIG. 4 is regarded as a reference state. In FIG. 5, the vehicle axis of the vehicle V extends in a tilted manner lowering from a rear side toward a front side relative to the contact ground surface. In this case, the optical axis of the forward-periphery imaging camera 21 extends in a tilted manner lowering from the rear side toward the front side relative to the contact ground surface.

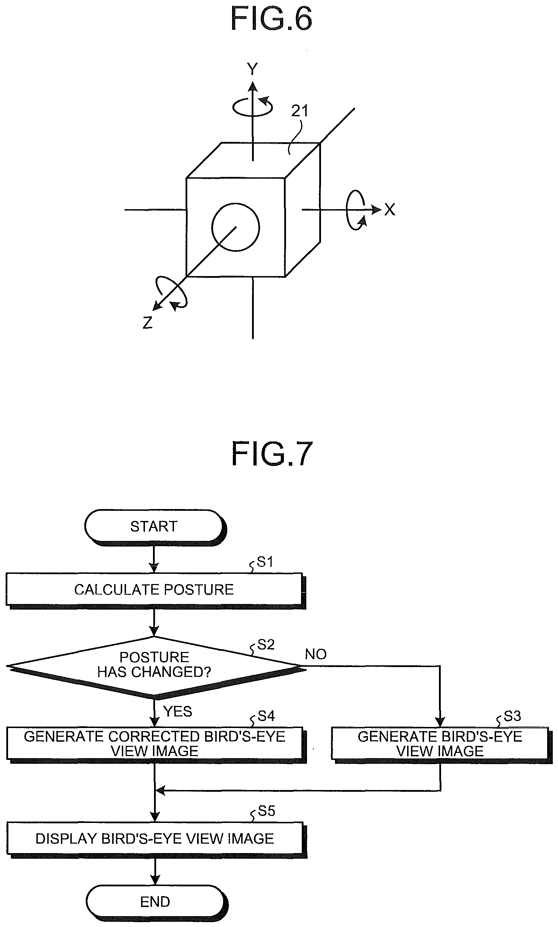

The posture of the forward-periphery imaging camera 21 is explained, using FIG. 6. FIG. 6 is a schematic diagram explaining a posture of the forward-periphery imaging camera of the bird's-eye-view-image generating system according to the first embodiment. In a coordinate system of the forward-periphery imaging camera 21, an optical axis direction of the forward-periphery imaging camera 21 is a Z axis, and directions perpendicular to the Z axis are an X axis and a Y axis, and a center of the forward-periphery imaging camera 21 is the origin point of the coordinate system. The posture of the forward-periphery imaging camera 21 is identified by six axes of coordinates (x1, y1, z1) and rotation components about the X axis, the Y axis, and the Z axis (θX1, θY1, θZ1). In the present embodiment, a tilt angle θX1, which is the rotation component about the X axis, a height y1 in the direction of the Y axis indicating a height from the contact ground surface, and a rotation angle θZ1, which is a rotation component about the Z axis vary in the forward-periphery imaging camera 21.

In the forward-periphery imaging camera 21, an angle of view in the horizontal direction is, for example, 120° to 190°, and an angle of view in the vertical direction is, for example, 90° to 120°. In the present embodiment, imaging conditions including the angle of view of the forward-periphery imaging camera 21 are fixed. The forward-periphery imaging camera 21 outputs a captured periphery image to an image acquiring unit 41 of the bird's-eye-view-image generating device 40. The periphery image acquired by the forward-periphery imaging camera 21 is, for example, image data of successive images of 60 frames per second.

The rearward-periphery imaging camera 22 is arranged on a back of the vehicle V and images mainly a rearward periphery of the vehicle V. The rearward-periphery imaging camera 22 is fixed to the vehicle V. In other words, the position and the posture of the rearward-periphery imaging camera 22 relative to the vehicle V are fixed. Therefore, when the posture of the vehicle V relative to a contact ground surface including a surface of the ground and a surface of a floor changes, the posture of the rearward-periphery imaging camera 22 relative to the contact ground surface changes.

The posture of the rearward-periphery imaging camera 22 is identified by six axes of coordinates (x2, y2, z2) and rotation components about the X axis, the Y axis, and the Z axis (θX2, θY2, θZ2), using an optical axis direction of the rearward-periphery imaging camera 22 as a Z axis, directions perpendicular to the Z axis are an X axis and a Y axis, and a center of the rearward-periphery imaging camera 22 as the origin point of the coordinate system. In the present embodiment, a tilt angle θX2, which is the rotation component about the X axis, a height y2 in the direction of the Y axis indicating a height from the contact ground surface, and a rotation angle θZ2, which is a rotation component about the Z axis, vary in the rearward-periphery imaging camera 22.

In the rearward-periphery imaging camera 22, an angle of view in the horizontal direction is, for example, 120° to 190°, and an angle of view in the vertical direction is, for example, 90° to 120°. The rearward-periphery imaging camera 22 outputs a captured periphery image to the image acquiring unit 41 of the bird's-eye-view-image generating device 40. The periphery image acquired by the rearward-periphery imaging camera 22 is, for example, image data of successive images of 60 frames per second.

The leftward-periphery imaging camera 23 is arranged on a left side of the vehicle V and images a periphery mainly on a left side of the vehicle V. The leftward-periphery imaging camera 23 is fixed to the vehicle V. In other words, the position and the posture of the leftward-periphery imaging camera 23 relative to the vehicle V are fixed. Therefore, when the posture of the vehicle V relative to a contact ground surface including a surface of the ground and a surface of a floor changes, the posture of the leftward-periphery imaging camera 23 relative to the contact ground surface changes.

The posture of the leftward-periphery imaging camera 23 is identified by six axes of coordinates (x3, y3, z3) and rotation components about the X axis, the Y axis, and the Z axis (θX3, θY3, θZ3), using an optical axis direction of the leftward-periphery imaging camera 23 as a Z axis, directions perpendicular to the Z axis are an X axis and a Y axis, and a center of the leftward-periphery imaging camera 23 as the origin point of the coordinate system. In the present embodiment, a tilt angle θX3, which is the rotation component about the X axis, a height y3 in the direction of the Y axis indicating a height from the contact ground surface, and a rotation angle θZ3, which is a rotation component about the Z axis, vary in the leftward-periphery imaging camera 23.

In the leftward-periphery imaging camera 23, an angle of view in the horizontal direction is, for example, 120° to 190°, and an angle of view in the vertical direction is, for example, 90° to 120°. The leftward-periphery imaging camera 23 outputs a captured periphery image to the image acquiring unit 41 of the bird's-eye-view-image generating device 40. The periphery image acquired by the leftward-periphery imaging camera 23 is, for example, image data of successive images of 60 frames per second.

The rightward-periphery imaging camera 24 is arranged on a right side of the vehicle V and images a periphery mainly on a right side of the vehicle V. The rightward-periphery imaging camera 24 is fixed to the vehicle V. In other words, the position and the posture of the rightward-periphery imaging camera 24 relative to the vehicle V are fixed. Therefore, when the posture of the vehicle V relative to a contact ground surface including a surface of the ground and a surface of a floor changes, the posture of the rightward-periphery imaging camera 24 relative to the contact ground surface changes.

The posture of the rightward-periphery imaging camera 24 is identified by six axes of coordinates (x4, y4, z4) and rotation components about the X axis, the Y axis, and the Z axis (θX4, θY4, θZ4), using an optical axis direction of the rightward-periphery imaging camera 24 as a Z axis, directions perpendicular to the Z axis are an X axis and a Y axis, and a center of the rightward-periphery imaging camera 24 as the origin point of the coordinate system. In the present embodiment, a tilt angle θX4, which is the rotation component about the X axis, a height y4 in the direction of the Y axis indicating a height from the contact ground surface, and a rotation angle θZ4, which is a rotation component about the Z axis, vary in the rightward-periphery imaging camera 24.

In the rightward-periphery imaging camera 24, an angle of view in the horizontal direction is, for example, 120° to 190°, and an angle of view in the vertical direction is, for example, 90° to 120°. The rightward-periphery imaging camera 24 outputs a captured periphery image to the image acquiring unit 41 of the bird's-eye-view-image generating device 40. The periphery image acquired by the rightward-periphery imaging camera 24 is, for example, image data of successive images of 60 frames per second.

Referring back to FIG. 1, the storage device 30 stores data necessary for various processing in the bird's-eye-view-image generating device 40 and various kinds of processing results. The storage device 30 is a storage device of, for example, a semiconductor memory device, such as a RAM (random-access memory), a ROM (read-only memory), and a flash memory, or a hard disk, an optical disk, or the like.

The storage device 30 stores a periphery image of the latest frame and a periphery image of a next previous frame acquired by the image acquiring unit 41.

The storage device 30 associates a difference in a height direction (height direction variation) of a vanishing point P in two periphery imagers acquired by the forward-periphery imaging camera 21 and a difference in the tilt angle θX1 (variation of the tilt angle θX1) of the forward-periphery imaging camera 21 with each other, to store as tilt-angle variation data. The storage device 30 stores a difference in a height direction of a vanishing point P in two periphery imagers acquired by the rearward-periphery imaging camera 22 and a difference in the tilt angle θX2 (variation of the tilt angle θX2) of the rearward-periphery imaging camera 22 with each other, to store as tilt-angle variation data. The storage device 30 stores a difference in a height direction of a vanishing point P in two periphery imagers acquired by the leftward-periphery imaging camera 23 and a difference in the tilt angle θX3 (variation of the tilt angle θX3) of the leftward-periphery imaging camera 23 with each other, to store as tilt-angle variation data. The storage device 30 stores a difference in a height direction of a vanishing point P in two periphery imagers acquired by the rightward-periphery imaging camera 24 and a difference in the tilt angle θX4 (variation of the tilt angle θX4) of the rightward-periphery imaging camera 24 with each other, to store as tilt-angle variation data. Thus, by referring to the tilt-angle variation data, if a difference in a height direction of a vanishing point P in two periphery images is obtained, a difference among the tilt angle θX1 to the tilt angle θX4 of the camera that has acquired two periphery images can be acquired.

The bird's-eye-view-image generating device 40 is an arithmetic processing unit that is constituted of, for example, a CPU (central processing unit) or the like. The bird's-eye-view-image generating device 40 loads a program that is stored in the storage device 30 into a memory, and executes a command included in the program. The bird's-eye-view-image generating device 40 includes the image acquiring unit 41, a vehicle-information acquiring unit 42, and a control unit 43 that includes a posture-change determining unit 44, a bird's-eye-view-image generating unit 45, and the display control unit 46.

A posture-change determining device 50 is an arithmetic processing unit constituted of, for example, a CPU or the like. The posture-change determining device 50 loads a program that is stored in the storage device 30 into a memory, and executes a command included in the program. The posture-change determining device 50 implements a part of functions of the bird's-eye-view-image generating device 40. Specifically, the posture-change determining device 50 includes the control unit 43 including the image acquiring unit 41 and the posture-change determining unit 44.

The image acquiring unit 41 acquires a periphery image in which a periphery of the vehicle V is imaged. More specifically, the image acquiring unit 41 acquires periphery images that are output by the periphery imaging camera 21 to the periphery imaging camera 24. The image acquiring unit 41 outputs the acquired periphery images to the posture-change determining unit 44 and the bird's-eye-view-image generating unit 45.

The vehicle-information acquiring unit 42 is connected to the CAN installed in the vehicle V and acquires OBD (on board diagnosis) II data and the like, thereby acquiring various kinds of information about the vehicle V. The vehicle-information acquiring unit 42 acquires, for example, shift position information and vehicle speed information as the information about the vehicle V. The vehicle-information acquiring unit 42 outputs the acquired vehicle information to the control unit 43.

The control unit generates the bird's-eye view image 300 and outputs it to the display panel 101 when it is determined that an arbitrary condition to start display of the bird's-eye view image 300 is satisfied based on the vehicle information acquired by the vehicle-information acquiring unit 42. The arbitrary condition is, for example, acquisition of information indicating that the shift position is in a reverse gear, the traveling speed being lower than a predetermined speed, detection of input of an operation to start display of the bird's-eye view image 300, or the like. The control unit 43 includes the posture-change determining unit 44 that determines a change of the posture of the vehicle V from a periphery image acquired by the image acquiring unit 41, the bird's-eye-view-image generating unit 45 that generates the bird's-eye view image 300 that is obtained by performing eye point conversion of the periphery image acquired by the image acquiring unit 41 and by correcting the periphery image based on a determination result by the posture-change determining unit 44, and the display control unit 46 that outputs the bird's-eye view image 300 generated by the bird's-eye-view-image generating unit 45 to the display panel 101.

The posture-change determining unit 44 determines a change of the posture of the vehicle V from a periphery image acquired by the image acquiring unit 41. More specifically, the posture-change determining unit 44 calculates variations of the tilt angle θX1 to the tilt angle θX4 of the periphery imaging camera 21 to the periphery imaging camera 24, variations of the height y1 to the height y4, variations of the rotation angle θZ1 to the rotation angle θZ4 based on multiple periphery images that are acquired by the image acquiring unit 41. The posture-change determining unit 44 then determines whether the posture of the vehicle V has changed based on the variations of the tilt angle θX1 to the tilt angle θX4 of the periphery imaging camera 21 to the periphery imaging camera 24, the variations of the height y1 to the height y4, the variations of the rotation angle θZ1 to the rotation angle θZ4 based on multiple periphery images that are acquired by the image acquiring unit 41.

As normal processing, the bird's-eye-view-image generating unit 45 generates the bird's-eye view image 300 by subjecting the periphery images acquired by the image acquiring unit 41 to the eye point conversion so that an image looking the vehicle V down from above is obtained, and by superimposing the virtual own-vehicle image A looking the vehicle V from above thereon. The bird's-eye-view-image generating unit 45 generates the bird's-eye view image 300 based on the periphery images captured by the periphery imaging camera 21 to the periphery imaging camera 24. A method of generating the bird's-eye view image 300 can be any of publicly-known methods and is not limited. The bird's-eye-view-image generating unit 45 outputs the generated bird's-eye view image 300 to the display control unit 46.

In the normal processing, the periphery imaging camera 21 to the periphery imaging camera 24 are in a reference state illustrated in FIG. 4. In the reference state, the periphery imaging camera 21 to the periphery imaging camera 24 are positioned at a predetermined height of the vehicle V, the X axis and the Z axis thereof extend along a direction parallel to the contact ground surface, and the Y axis thereof extends in a direction perpendicular to the contact ground surface.

The bird's-eye view image 300 includes the virtual own-vehicle image A and at least one of a front image 301, a rear image 302, a left side image 303, and a right side image 304. In the present embodiment, the bird's-eye view image 300 is generated in a rectangular shape. The bird's-eye view image 300 includes at least one of a first region F1 showing the front image 301, a second region F2 showing the rear image 302, a third region F3 showing the left side image 303, and a fourth region F4 showing the right side image 304. In the present embodiment, the bird's-eye view image 300 includes the first region F1, the second region F2, the third region F3, and the fourth region F4.

As correction processing, the bird's-eye-view-image generating unit 45 corrects, when a determination result by the posture-change determining unit 44 indicates that the posture of at least either one of the periphery imaging camera 21 to the periphery imaging camera 24 has changed, the periphery images acquired by the image acquiring unit 41 according to the change of the posture of the periphery imaging camera 21 to the periphery imaging camera 24, and performs the eye point conversion so that an image looking the vehicle V down from above is obtained, and superimposes the virtual own-vehicle image A looking the vehicle V down from above thereon, to generate the bird's-eye view image 300. The bird's-eye-view-image generating unit 45 outputs the generated bird's-eye view image 300 to the display control unit 46.

To correct the periphery images according to the change of the posture of the periphery imaging camera 21 to the periphery imaging camera 24 and to performing the eye point conversion into an image looking the vehicle V down from above in correction processing is, for example, to perform eye point conversion considering a displacement of an imaging point of the periphery image from the reference state. The change of posture of the periphery imaging camera 21 to the periphery imaging camera 24 herein is deviations in height of the periphery imaging camera 21 to the periphery imaging camera 24 relative to the ground surface due to irregularities of the ground surface from a state in which the vehicle V is present on a flat ground surface. Such a deviation occurs, for example, when one of wheels of the vehicle V is rolling over a ramp, when one of the wheels enters a different slope, when a load disabling the vehicle V to keep a horizontal position is on with a passenger or loads carried thereon, or the like.

The display control unit 46 outputs the bird's-eye view image 300 generated by the bird's-eye-view-image generating unit 45 to the display panel 101.

Next, a flow of processing in the posture-change determining device 50 and the bird's-eye-view-image generating device 40 of the bird's-eye-view-image generating system 10 is explained, referring to FIG. 7. FIG. 7 is a flowchart illustrating a flow of processing by the posture-change determining device and the bird's-eye-view-image generating device of the bird's-eye-view-image generating system according to the first embodiment.

The control unit 43 calculates a posture (step S1). More specifically, the control unit 43 causes the posture-change determining unit 44 to calculate the variations of the tilt angle θX1 to the tilt angle θX4 of the periphery imaging camera 21 to the periphery imaging camera 24, the variations of the height y1 to the height y4, the variations of the rotation angle θZ1 to the rotation angle θZ4 based on multiple periphery images that are acquired by the image acquiring unit 41.

The control unit 43 causes the posture-change determining unit 44 to calculate the variations of the tilt angle θX1 to the tilt angle θX4 of the periphery imaging camera 21 to the periphery imaging camera 24 based on the periphery images that are captured by the periphery imaging camera 21 to the periphery imaging camera 24 and acquired by the image acquiring unit 41.

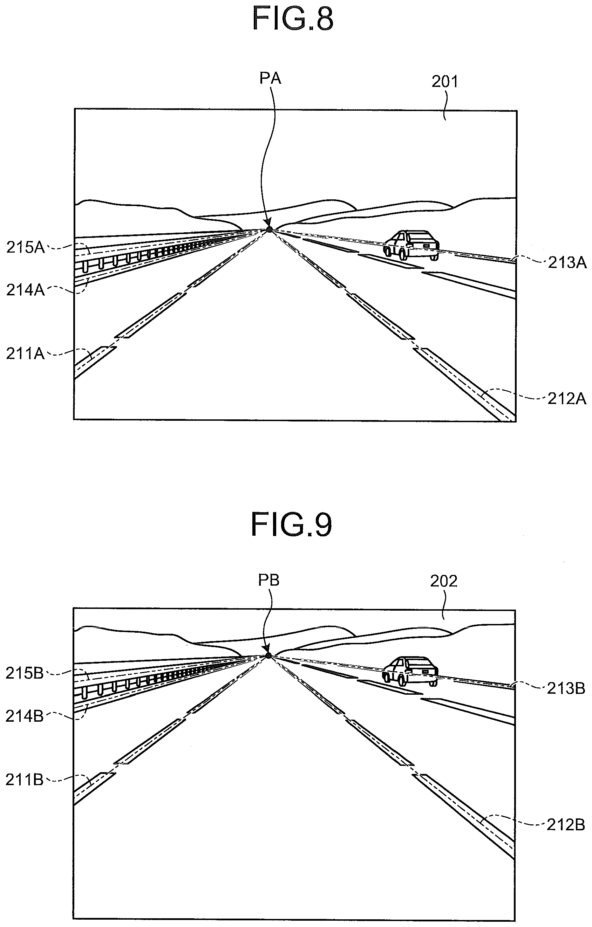

Calculation of the variations of the tilt angle θX1 of the forward-periphery imaging camera 21 is explained, using FIG. 8 and FIG. 9. FIG. 8 illustrates one example of an image captured by the forward-periphery imaging camera of the bird's-eye-view-image generating system according to the first embodiment. FIG. 9 illustrates another example of an image captured by the forward-periphery imaging camera of the bird's-eye-view-image generating system according to the first embodiment. A periphery image 201 and a periphery image 202 are periphery images that are captured by the forward-periphery imaging camera 21 at a predetermined frame interval. For example, the periphery image 201 is a periphery image of a previous frame and the periphery image 202 is a periphery image of the latest frame.

The control unit 43 causes the posture-change determining unit 44 to calculate the variations of the tilt angle θX1 of the forward-periphery imaging camera 21 based on the periphery images captured at the predetermined frame interval by the forward-periphery imaging camera 21 and acquired by the image acquiring unit 41.

More specifically, the control unit 43 causes the posture-change determining unit 44 to extract, for example, an imaged object 211, an imaged object 212, an imaged object 213, an imaged object 214, an imaged object 215 that linearly extend in a direction parallel to the contact ground surface, such as a road marking, an installed item on a road, or a building, from the periphery image 201 illustrated in FIG. 8. The road marking includes various kinds of indications of, for example, a center line of roads, a lane boundary line, an outer lane of roads, a pedestrian lane. The installed item of roads includes, for example, installed items such as a guard rail, a side wall, a curbstone. The imaged object 211, the imaged object 212, and the imaged object 213 are lanes. The imaged object 214 is a curbstone. The image object 215 is a side wall. The control unit 43 causes the posture-change determining unit 44 to extend straight lines corresponding to the imaged object 211, the imaged object 212, the imaged object 213, the imaged object 214, and the imaged object 215 in the periphery image 201. The control unit 43 then causes the posture-change determining unit 44 to identify an intersection of the straight lines as a vanishing point PA of the periphery image 201. The control unit 43 causes the posture-change determining unit 44 to identify a vanishing point PB of the periphery image 202 illustrated in FIG. 9 similarly. The control unit 43 then causes the posture-change determining unit 44 to acquire a difference in a height direction between the vanishing point PA of the periphery image 201 and the vanishing point PB of the periphery image 202. Subsequently, the control unit 43 causes the posture-change determining unit 44 to acquire a variation of the tilt angle θX1 of the forward-periphery imaging camera 21 corresponding to the difference in the height direction between the vanishing point PA and the vanishing point PB based on the tilt-angle variation data stored in the storage device 30.

The control unit 43 performs this processing respectively for the rearward-periphery imaging camera 22, the leftward-periphery imaging camera 23, and the rightward-periphery imaging camera 24, and acquires a variation of the tilt angle θX2 of the rearward-periphery imaging camera 22, a variation of the tilt angle θX3 of the leftward-periphery imaging camera 23, and a variation of the tilt angle θX4 of the rightward-periphery imaging camera 24.

The control unit 43 causes the posture-change determining unit 44 to calculate variations of the height y1 to the height y4 of the periphery imaging camera 21 to the periphery imaging camera 24 based on the periphery images that have been captured by the periphery imaging camera 21 to the periphery imaging camera 24 and acquired by the image acquiring unit 41.

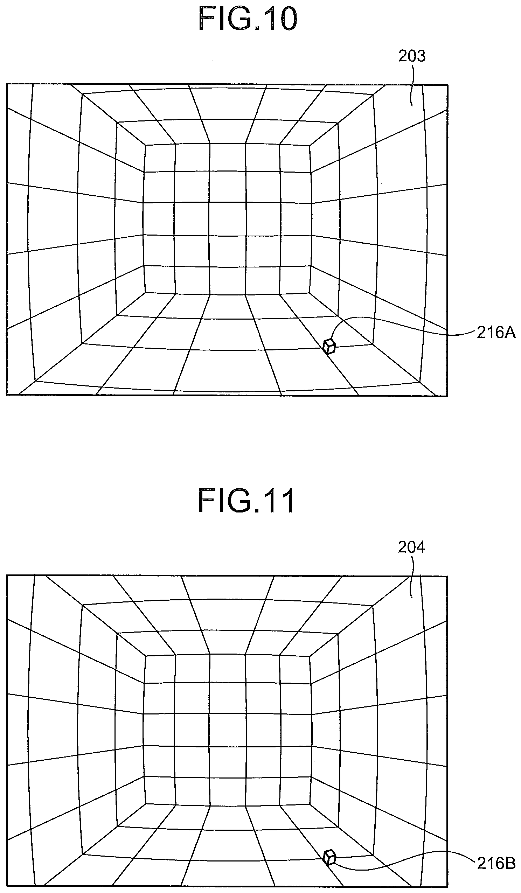

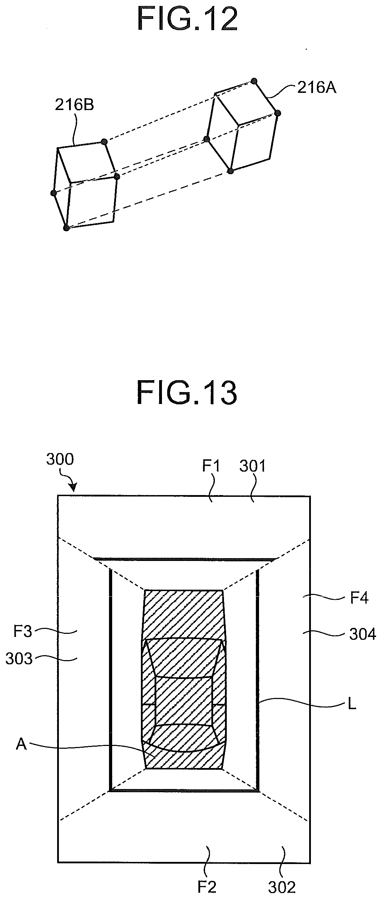

Calculation of a variation of the height y1 of the forward-periphery imaging camera 21 is explained, using FIG. 10 to FIG. 12. FIG. 10 illustrates another example of an image captured by the forward-periphery imaging camera of the bird's-eye-view-image generating system according to the first embodiment. FIG. 11 illustrates another example of an image captured by the forward-periphery imaging camera of the bird's-eye-view-image generating system according to the first embodiment. FIG. 12 is a schematic diagram explaining a movement vector. A periphery image 203 and a periphery image 204 are images captured by the forward-periphery imaging camera 21 at predetermined frame interval. For example, the periphery image 203 is a periphery image of a next previous frame, and the periphery image 204 is a periphery image of the latest frame.

The control unit 43 causes the posture-change determining unit 44 to calculate a variation of the height y1 of the forward-periphery imaging camera 21 based on the periphery images captured by the forward-periphery imaging camera 21 at the predetermined frame interval and acquired by the image acquiring unit 41.

More specifically, the control unit 43 causes the posture-change determining unit 44 to extract an imaged object 216A that is positioned right below the forward-periphery imaging camera 21 in the periphery image 203 illustrated in FIG. 10. For the imaged object 216A positioned right below the forward-periphery imaging camera 21, for example, feature points of the image included in a lower central region of the periphery image 203 can be extracted. The control unit 43 then causes the posture-change determining unit 44 to perform pattern matching in the periphery image 204 illustrated in FIG. 11, and to extract an imaged object 216B corresponding to the imaged object 216A. The control unit 43 causes the posture-change determining unit 44 to extract a movement vector based on the imaged object 216A and the imaged object 216B as illustrated in FIG. 12. The control unit 43 then causes the posture-change determining unit 44 to acquire a variation of the height y1 of the forward-periphery imaging camera 21 from the extracted movement vector. In the present embodiment, as the vehicle V is in a stop state, the extracted movement vector expresses the variation of the height y1 of the forward-periphery imaging camera 21.

The movement vector is explained herein. The movement vector is a vector that expresses a parallel shift amount of image when the image moved in a parallel direction along with movement of the camera. The method of extracting a movement vector can be any of the publicly-known methods, and is not limited.

The control unit 43 performs this processing for each of the rearward-periphery imaging camera 22, the leftward-periphery imaging camera 23, and the rightward-periphery imaging camera 24, and acquires a variation of the height y2 of the rearward-periphery imaging camera 22, a variation of the height y3 of the leftward-periphery imaging camera 23, and a variation of the height y4 of the rightward-periphery imaging camera 24.

The control unit 43 causes the posture-change determining unit 44 to calculate variations of the rotation angle θZ1 to the rotation angle θZ4 of the periphery imaging camera 21 to the periphery imaging camera 24 based on the periphery images that are captured by the periphery imaging camera 21 to the periphery imaging camera 24 and acquired by the image acquiring unit 41.

More specifically, the control unit 43 causes the posture-change determining unit 44 to calculate the variation of rotation angle θZ1 of the forward-periphery imaging camera 21 based on at least either set of the variation of the tilt angle θX3 and the variation of the height y3 of the leftward-periphery imaging camera 23, and the variation of the tilt angle θX4 and the variation of the height y4 of the rightward-periphery imaging camera 24.

The control unit 43 causes the posture-change determining unit 44 to calculate the variation of rotation angle θZ2 of the rearward-periphery imaging camera 22 based on at least either set of the variation of the tilt angle θX3 and the variation of the height y3 of the leftward-periphery imaging camera 23, and the variation of the tilt angle θX4 and the variation of the height y4 of the rightward-periphery imaging camera 24.

The control unit 43 causes the posture-change determining unit 44 to calculate the variation of rotation angle θZ3 of the leftward-periphery imaging camera 23 based on at least either set of the variation of the tilt angle θX1 and the variation of the height y1 of the forward-periphery imaging camera 21, and the variation of the tilt angle θX2 and the variation of the height y2 of the rearward-periphery imaging camera 22.

The control unit 43 causes the posture-change determining unit 44 to calculate the variation of rotation angle θZ4 of the rightward-periphery imaging camera 24 based on at least either set of the variation of the tilt angle θX1 and the variation of the height y1 of the forward-periphery imaging camera 21, and the variation of the tilt angle θX2 and the variation of the height y2 of the rearward-periphery imaging camera 22.

The control unit 43 determines whether the posture has changed (step S2). The control unit 43 makes the posture-change determining unit 44 determine that the posture has changed (YES) when at least one of the tilt angle θX1 to the tilt angle θX4, the height y1 to the height y4, and the rotation angle θZ1 to the rotation angle θZ4 of the periphery imaging camera 21 to the periphery imaging camera 24 has changed. The control unit 43 causes the posture-change determining unit 44 to determine that the posture has not changed (NO) when none of the tilt angle θX1 to the tilt angle θX4, the height y1 to the height y4, and the rotation angle θZ1 to the rotation angle θZ4 of the periphery imaging camera 21 to the periphery imaging camera 24 has changed.

The control unit 43 proceeds to step S3 when the posture-change determining unit 44 determines that the posture has not changed (NO at step S2).

The control unit 43 proceeds to step S4 when the posture-change determining unit 44 determines that the posture has changed (YES at step S2).

The control unit 43 causes the bird's-eye-view-image generating unit 45 to generate the bird's-eye view image 300 as normal processing (step S3). More specifically, the control unit 43 causes the bird's-eye-view-image generating unit 45 to perform the eye point conversion of the periphery images acquired by the image acquiring unit 41 into an image looking the vehicle V down from above, and to superimpose the virtual own-vehicle image A looking the vehicle V down from above thereon, to generate the bird's-eye view image 300.

The control unit 43 causes the bird's-eye-view-image generating unit 45 to generate the bird's-eye view image 300 corrected as correction processing (step S4). More specifically, the control unit 43 causes the bird's-eye-view-image generating unit 45 to correct the periphery images acquired by the image acquiring unit 41 according to the change of the posture of the periphery imaging camera 21 to the periphery imaging camera 24, to perform the eye point conversion so that an image looking the vehicle V down from above is obtained, and to superimpose the virtual own-vehicle image A looking the vehicle V down from above thereon, to generate the bird's-eye view image 300.

Specifically, the control unit 43 first causes the posture-change determining unit 44 to determine whether at least one of the tilt angle θX1, the height y1, and the rotation angle θZ1 of the forward-periphery imaging camera 21 has changed. The control unit 43 causes the bird's-eye-view-image generating unit 45 to generate the front image 301 that is obtained by subjecting the periphery image captured by the forward-periphery imaging camera 21 to correction according to the change of the posture of the forward-periphery imaging camera 21, and to the eye point conversion so that an image looking the vehicle V down from above is obtained, when the posture-change determining unit 44 determines that at least either one of the tilt angle θX1, the height y1, and the rotation angle θZ1 of the forward-periphery imaging camera 21 has changed. The control unit 43 causes the bird's-eye-view-image generating unit 45 to generate the front image 301 by subjecting the periphery image captured by the forward-periphery imaging camera 21 to the eye point conversion so that an image looking the vehicle V down from above is obtained, when the posture-change determining unit 44 determines that none of the tilt angle θX1, the height y1, and the rotation angle θZ1 of the forward-periphery imaging camera 21 has changed.

The control unit 43 causes the posture-change determining unit 44 to determine whether at least one of the tilt angle θX2, the height y2, and the rotation angle θZ2 of the rearward-periphery imaging camera 22 has changed. The control unit 43 causes the bird's-eye-view-image generating unit 45 to generate the rear image 302 that is obtained by subjecting the periphery image captured by the rearward-periphery imaging camera 22 to correction according to the change of the posture of the rearward-periphery imaging camera 22, and to the eye point conversion so that an image looking the vehicle V down from above is obtained, when the posture-change determining unit 44 determines that at least either one of the tilt angle θX2, the height y2, and the rotation angle θZ2 of the rearward-periphery imaging camera 22 has changed. The control unit 43 causes the bird's-eye-view-image generating unit 45 to generate the rear image 302 by subjecting the periphery image captured by the rearward-periphery imaging camera 22 to the eye point conversion so that an image looking the vehicle V down from above is obtained, when the posture-change determining unit 44 determines that none of the tilt angle θX2, the height y2, and the rotation angle θZ2 of the rearward-periphery imaging camera 22 has changed.

The control unit 43 causes the posture-change determining unit 44 to determine whether at least one of the tilt angle θX3, the height y3, and the rotation angle θZ3 of the leftward-periphery imaging camera 23 has changed. The control unit 43 causes the bird's-eye-view-image generating unit 45 to generate the left side image 303 that is obtained by subjecting the periphery image captured by the leftward-periphery imaging camera 23 to correction according to the change of the posture of the leftward-periphery imaging camera 23, and to the eye point conversion so that an image looking the vehicle V down from above is obtained, when the posture-change determining unit 44 determines that at least either one of the tilt angle θX3, the height y3, and the rotation angle θZ3 of the leftward-periphery imaging camera 23 has changed. The control unit 43 causes the bird's-eye-view-image generating unit 45 to generate the left side image 303 by subjecting the periphery image captured by the leftward-periphery imaging camera 23 to the eye point conversion so that an image looking the vehicle V down from above is obtained, when the posture-change determining unit 44 determines that none of the tilt angle θX3, the height y3, and the rotation angle θZ3 of the leftward-periphery imaging camera 23 has changed.

The control unit 43 causes the posture-change determining unit 44 to determine whether at least one of the tilt angle θX4, the height y4, and the rotation angle θZ4 of the rightward-periphery imaging camera 24 has changed. The control unit 43 causes the bird's-eye-view-image generating unit 45 to generate the right side image 304 that is obtained by subjecting the periphery image captured by the rightward-periphery imaging camera 24 to correction according to the change of the posture of the rightward-periphery imaging camera 24, and to the eye point conversion so that an image looking the vehicle V down from above is obtained, when the posture-change determining unit 44 determines that at least either one of the tilt angle θX4, the height y4, and the rotation angle θZ4 of the rightward-periphery imaging camera 24 has changed. The control unit 43 causes the bird's-eye-view-image generating unit 45 to generate the right side image 304 by subjecting the periphery image captured by the rightward-periphery imaging camera 24 to the eye point conversion so that an image looking the vehicle V down from above is obtained, when the posture-change determining unit 44 determines that none of the tilt angle θX4, the height y4, and the rotation angle θZ4 of the rightward-periphery imaging camera 24 has changed.

Subsequently, the control unit 43 causes the bird's-eye-view-image generating unit 45 to combine the front image 301, the rear image 302, the left side image 303, and the right side image 304, and to superimpose the virtual own-vehicle image A looking the vehicle V down from above thereon, to generate the bird's-eye view image 300. The correction according to the change of the posture of the respective cameras is to change a cut out area of a periphery image or to change a cut out position.

The control unit 43 displays the bird's-eye view image 300 (step S5). More specifically, the control unit 43 causes the display control unit 46 to display the bird's-eye view image 300 that is generated at step S3 or the bird's-eye view image 300 that is generated at step S4 on the display panel 101.

As described, the bird's-eye-view-image generating system 10 generates the bird's-eye view image 300 and outputs an image signal to the display panel 101 mounted on the vehicle V. The display panel 101 displays the bird's-eye view image 300, for example, along with navigation based on an image signal output from the bird's-eye-view-image generating system 10.

As described above, according to the present embodiment, when the posture of at least one of the periphery imaging camera 21 to the periphery imaging camera 24 changes, a periphery image acquired by the image acquiring unit 41 is corrected according to the change of the posture of the periphery imaging camera 21 to the periphery imaging camera 24, and is subjected to the eye point conversion so that an image looking the vehicle V down from above is obtained, and is combined with the virtual own-vehicle image A looking the vehicle V down from above superimposed thereon, and thus the bird's-eye view image 300 can be generated.

The present embodiment enables to generate the appropriate bird's-eye view image 300 even when the vehicle V sinks down due to loading and unloading of passengers or goods, breaking operation, or rolling over a ramp and entrance to a slope, by appropriate correction according to a change of the posture of the periphery imaging camera 21 to the periphery imaging camera 24.

A conventional form of the bird's-eye view image 300 when the vehicle V sinks down is explained using FIG. 13 for comparison. FIG. 13 illustrates a conventional bird's-eye view image. FIG. 13 illustrates the bird's-eye view image 300 when a front side of the vehicle V sinks down, for example, as a passenger has got on the front side of the vehicle in stop. The height y1 of the forward-periphery imaging camera 21 is low compared to a state before the vehicle V sinks down. For simplicity of explanation, it is assumed that the height y2 to the height y4 of the rearward-periphery imaging camera 22, the leftward-periphery imaging camera 23, and the rightward-periphery imaging camera 24 are not changed. Therefore, connection between the front image 301 and the left side image 303, and the right side image 304 is discontinuous in the bird's-eye view image 300. In other words, the bird's-eye view image 300 is distorted with discontinuous boundaries between the first region F1 and the third region F3, and the fourth region F4. As described, in the bird's-eye view image 300, a parking frame L is discontinuous and distorted.

On the other hand, according to the present embodiment, the parking frame L is continuous, and the distortion is suppressed in the bird's-eye view image 300 as illustrated in FIG. 2. Thus, according to the present embodiment, for example, even when the front side of the vehicle V sinks down and the postures of the periphery imaging camera 21 to the periphery imaging camera 24 change, the bird's-eye view image 300 in which connection between periphery images to be combined is smoothly continuous and distortion is suppressed can be generated. According to the present embodiment, even when the posture of the vehicle V changes, the appropriate bird's-eye view image 300 around the vehicle can be provided.

According to the present embodiment, it is possible to determine whether the postures of the periphery imaging camera 21 to the periphery imaging camera 24 have changed based on periphery images acquired by the image acquiring unit 41. In other words, the present embodiment enables to determine whether the postures of the periphery imaging camera 21 to the periphery imaging camera 24 have changed without arranging a sensor to detect a change of posture to the vehicle V. Moreover, the present embodiment enables to calculate a change of postures of the periphery imaging camera 21 to the periphery imaging camera 24 based on periphery images acquired by the image acquiring unit 41. As described, the present embodiment can be applied easily to the vehicle V as it is not necessary to prepare a sensor or the like on the vehicle V.

### [Second Embodiment]

The bird's-eye-view-image generating system 10 of the present embodiment differs from the bird's-eye-view-image generating system 10 of the first embodiment in a point that the vehicle-information acquiring unit 42 acquires vehicle speed information through the CAN, and in processing in the control unit 43. Application of the present embodiment is not limited to a case in which the vehicle V is in stop.

The vehicle-information acquiring unit 42 is connected to the CAN provided in the vehicle V and acquires the OBD II data or the like, thereby acquiring the shift position information of the vehicle V and the vehicle speed information of the vehicle V.

The control unit 43 excludes movement vector components that are based on travel of the vehicle V when extracting movement vector based on periphery images captured at predetermined frame intervals, and thus extracts only movement vector corresponding to a change in height of the forward-periphery imaging camera 21. Movement vectors based on parallel movement in the horizontal direction of the vehicle V are different in direction from movement vector when images make parallel movement in the height direction along with movement of the camera in the height direction (vertical direction). Therefore, when extracting movement vectors based on periphery images captured at predetermined frame intervals, components of the movement vectors based on travel of the vehicle V can be easily removed. Alternatively, movement vectors based on travel of the vehicle V can be calculated based on the vehicle speed acquired by the vehicle-information acquiring unit 42.

As described above, according to the present embodiment, by correcting according to a change of postures of the periphery imaging camera 21 to the periphery imaging camera 24, the appropriate bird's-eye view image 300 around a vehicle can be provided regardless of whether the vehicle V is in stop or is traveling.

The bird's-eye-view-image generating system 10 according to the present invention has been explained so far, and it can be implemented in various different forms other than the embodiments described above.

The respective illustrated components of the bird's-eye-view-image generating system 10 are of a functional concept, and are not necessarily physically configured as illustrated. That is, specific forms of the respective devices are not limited to the ones illustrated, and all or a part thereof can be configured to be distributed or integrated functionally or physically in arbitrary units according to various kinds of loads, usage conditions, and the like of the respective devices.

The configuration of the bird's-eye-view-image generating system 10 is implemented, for example as software, by a program that is loaded to a memory, or the like. In the above embodiments, it is explained as a functional block that is implemented by coordination of the hardware and software. That is, these functional blocks can be implemented in various forms by only hardware, only software, or a combination of those.

The components described above include what can be easily thought of by those skilled in the art and what are substantially identical. Furthermore, the components described above can be combined as appropriate.

While it has been explained that the control unit 43 acquires variations of the tilt angle θX1 to the tilt angle θX4 of the periphery imaging camera 21 to the periphery imaging camera 24 based on a change in height of the vanishing point P in periphery images captured by the periphery imaging camera 21 to the periphery imaging camera 24, it is not limited thereto. The control unit 43 can acquire variations of the tilt angle θX1 to the tilt angle θX4 of the periphery imaging camera 21 to the periphery imaging camera 24, for example, based on a change of a position of convergence lines (convergent position) at which the contact ground surface of the vehicle V converges at infinity in periphery images captured by the periphery imaging camera 21 to the periphery imaging camera 24. The convergence line is, for example, the horizon or the skyline. In this case, the storage device 30 stores a difference of positions of convergence lines in two periphery images that are captured at predetermined frame interval by the periphery imaging camera 21 to the periphery imaging camera 24 and a difference among the tilt angle θX1 to the tilt angle θX4 of the periphery imaging camera 21 to the periphery imaging camera 24 in an associated manner as tilt-angle variation data.

The posture-change determining unit 44 can determine that the tilt angle θX1 to the tilt angle θX4 have changed, for example, when variations of the tilt angle θX1 to the tilt angle θX4 become equal to or higher than a predetermined value. The posture-change determining unit 44 can determine that the height y1 to the height y4 have changed, for example, when variations of the height y1 to the height y4 become equal to or higher than a predetermined value. The posture-change determining unit 44 can determine that the rotation angle θZ1 to the rotation angle θZ4 have changed, for example, when variations of the rotation angle θZ1 to the rotation angle θZ4 become equal to or higher than a predetermined value. Thus, processing loads in the bird's-eye-view-image generating system 10 can be reduced when a little change of posture of the periphery imaging camera 21 to the periphery imaging camera 24 continues.

### Reference Signs List

10 bird's-eye-view-image generating system
21 forward-periphery imaging camera (imaging device)
22 rearward-periphery imaging camera (imaging device)
23 leftward-periphery imaging camera (imaging device)
24 rightward-periphery imaging camera (imaging device)
30 storage device
40 bird's-eye-view-image generating device
41 image acquiring unit
42 vehicle-information acquiring unit
43 control unit
44 posture-change determining unit
45 bird's-eye-view-image generating unit
46 display control unit
50 posture-change determining device
101 display panel
300 bird's-eye view image (composite image)
A virtual own-vehicle image
P vanishing point
V vehicle

## Claims

1. A posture-change determining device comprising:
an image acquiring unit (41) configured to acquire a plurality of periphery images in which a periphery of a vehicle (V) is imaged by a plurality of imaging devices that are provided facing front, back, left and right in the vehicle (V); **characterized by**
a posture-change determining unit (44) configured to determine whether a posture of the vehicle (V) has changed,
a control unit (43) configured to cause the posture-change determining unit (44) to identify intersections of straight lines as vanishing points (PA,PB), the straight lines extending toward a depth direction in the periphery images, acquire a variation of a tilt angle of the imaging device corresponding to a difference in a height direction between the vanishing points (PA,PB), calculate a variation of a height of the imaging device by extracting a movement vector expressing a change of position of a feature point in the periphery images, and calculate a variation of a rotation angle of the imaging device based on a variation of a tilt angle of the other imaging device facing in a different direction and a variation of a height of the other imaging device, to determine whether the posture of the vehicle (V) has changed under a condition that a posture of at least one of the imaging devices has changed, wherein
a convergent position at which the straight lines converge is the vanishing point (P) at which a plurality of imaged objects that linearly extend in a direction parallel to a contact ground surface with which the vehicle (V) is in contact intersect when extended in the periphery images, and
the imaged object is at least one of a road marking, an installed item on a road, and a building.

2. The posture-change determining device according to claim 1, wherein
the posture-change determining unit (44) is configured to calculate a variation of a rotation angle of the imaging device that is provided facing front or back in the vehicle (V) based on a variation of a tilt angle of the imaging device that is provided facing left or right in the vehicle (V) and a variation of a height of the other imaging device.

3. The posture-change determining device according to claim 1, wherein
the posture-change determining unit (44) is configured to calculate a variation of a rotation angle of the imaging device that is provided facing left or right in the vehicle (V) based on a variation of a tilt angle of the imaging device that is provided facing front or back in the vehicle (V) and a variation of a height of the other imaging device.

4. A bird's-eye-view-image generating device (40) comprising:
the posture-change determining device according to any one of claims 1 to 3; and
a bird's-eye-view-image generating unit (45) configured to generate a bird's-eye view image (300) obtained by combining a plurality of periphery images acquired by the image acquiring unit (41) subjected to eye point conversion so that an image looking the vehicle (V) down from above is obtained, wherein
the bird's-eye-view-image generating unit (45) is configured to correct, when a determination result of the posture-change determining unit (44) indicates that the posture of at least either one of the imaging devices has changed, the periphery images acquired by the image acquiring unit (41) according to the change of the posture of the imaging device, and generates the bird's-eye view image (300).

5. A bird's-eye-view-image generating system (10) comprising:
the bird's-eye-view-image generating device (40) according to claim 4; and
an imaging device that is arranged in the vehicle (V) and that images a periphery of the vehicle (V) and provides a periphery image to the image acquiring unit (41).

6. A posture-change determining method, comprising:
an image acquiring step of acquiring a plurality of periphery images in which a periphery of a vehicle (V) is imaged by a plurality of imaging devices that are provided facing front, back, left and right in the vehicle (V); **characterized by**
a determining step of determining whether a posture of the vehicle (V) has changed, wherein
the determining step includes identifying intersections of straight lines as vanishing points (PA,PB), the straight lines extending toward a depth direction in the periphery images, acquiring a variation of a tilt angle of the imaging device corresponding to a difference in a height direction between the vanishing points (PA,PB), calculating a variation of a height of the imaging device by extracting a movement vector expressing a change of position of a feature point in the periphery images, and calculating a variation of a rotation angle of the imaging device based on a variation of a tilt angle of the other imaging device facing in a different direction and a variation of a height of the other imaging device, to determine whether the posture of the vehicle (V) has changed under a condition that a posture of at least either one of the imaging devices has changed, a convergent position at which the straight lines converge is the vanishing point (P) at which a plurality of imaged objects that linearly extend in a direction parallel to a contact ground surface with which the vehicle (V) is in contact intersect when extended in the periphery images, and
the imaged object is at least one of a road marking, an installed item on a road, and a building.

7. A program that causes a computer to operate as a posture-change determining device, the program comprising:
an image acquiring step of acquiring a plurality of periphery images in which a periphery of a vehicle (V) is imaged by a plurality of imaging devices that are provided facing front, back, left and right in the vehicle (V); **characterized by**
a determining step of determining whether a posture of the vehicle (V) has changed, wherein
the determining step includes identifying intersections of straight lines as vanishing points (PA,PB), the straight lines extending toward a depth direction in the periphery images, acquiring a variation of a tilt angle of the imaging device corresponding to a difference in a height direction between the vanishing points (PA,PB), calculating a variation of a height of the imaging device by extracting a movement vector expressing a change of position of a feature point in the periphery images, and calculating a variation of a rotation angle of the imaging device based on a variation of a tilt angle of the other imaging device facing in a different direction and a variation of a height of the other imaging device, to determine whether the posture of the vehicle (V) has changed under a condition that a posture of at least either one of the imaging devices has changed,
a convergent position at which the straight lines converge is the vanishing point (P) at which a plurality of imaged objects that linearly extend in a direction parallel to a contact ground surface with which the vehicle (V) is in contact intersect when extended in the periphery images, and
the imaged object is at least one of a road marking, an installed item on a road, and a building.

## Patentansprüche

1. Lageänderungsbestimmungsvorrichtung, die Folgendes aufweist:
eine Bilderfassungseinheit (41), die konfiguriert ist, um eine Vielzahl von Umfangsbildern aufzunehmen, in welchen ein Umfang bzw. eine Umgebung eines Fahrzeugs (V) abgebildet ist, und zwar durch eine Vielzahl von Bilderfassungsvorrichtungen, die so vorgesehen sind, dass sie in dem Fahrzeug (V) nach vorne, nach hinten, nach links und nach rechts weisen;
**gekennzeichnet durch**
eine Lageänderungsbestimmungseinheit (44), die konfiguriert ist, um zu bestimmen, ob eine Lage des Fahrzeugs (V) sich geändert hat,
eine Steuereinheit (43), die konfiguriert ist, um zu bewirken, dass die Lageänderungsbestimmungseinheit (44) Schnittpunkte von geraden Linien als Fluchtpunkte (PA, PB) identifiziert, wobei die geraden Linien sich zu einer Tiefenrichtung in den Umfangsbildern erstrecken, eine Variation eines Kippwinkels der Bilderfassungsvorrichtung entsprechend einer Differenz in eine Höhenrichtung zwischen den Fluchtpunkten (PA, PB) erfasst, eine Variation einer Höhe der Bilderfassungsvorrichtung berechnet, und zwar durch Extrahieren eines Bewegungsvektors, welcher eine Änderung einer Position eines Merkmalpunktes in den Umfangsbildern ausdrückt, und eine Variation eines Drehwinkels der Bilderfassungsvorrichtung basierend auf einer Variation eines Kippwinkels der anderen Bilderfassungsvorrichtung, welche in eine andere Richtung weist, und einer Variation einer Höhe der anderen Bilderfassungsvorrichtung berechnet, um zu bestimmen, ob die Lage des Fahrzeugs (V) sich geändert hat, und zwar unter einer Bedingung, dass eine Lage von mindestens einer der Bilderfassungsvorrichtungen sich geändert hat, wobei
eine Treffpunktposition, an der die geraden Linien sich treffen, der Fluchtpunkt (P) ist, bei welchem eine Vielzahl von aufgenommenen Objekten, die sich in einer Richtung parallel zu einer Kontaktbodenfläche erstrecken, mit welcher das Fahrzeug (V) in Kontakt ist, schneiden, wenn sie in den Umfangsbildern verlängert werden, und
wobei das abgebildete Objekt mindestens eines von Folgenden ist: eine Straßenmarkierung, ein auf einer Straße installiertes Element und ein Gebäude.

2. Lageänderungsbestimmungsvorrichtung nach Anspruch 1, wobei die Lageänderungsbestimmungseinheit (44) konfiguriert ist, um eine Variation eines Drehwinkels der Bilderfassungsvorrichtung, die so vorgesehen ist, dass sie in dem Fahrzeug (V) nach vorne oder nach hinten weist, basierend auf einer Veränderung eines Kippwinkels der Bilderfassungsvorrichtung, die in dem Fahrzeug (V) so vorgesehen ist, dass sie nach links oder rechts weist, und einer Variation einer Höhe der anderen Bilderfassungsvorrichtung zu berechnen.

3. Lageänderungsbestimmungsvorrichtung nach Anspruch 1, wobei die Lageänderungsbestimmungseinheit (44) konfiguriert ist, um eine Variation eines Drehwinkels der Bilderfassungsvorrichtung, die in dem Fahrzeug (V) so vorgesehen ist, dass sie nach links oder rechts weist, basierend auf einer Variation eines Kippwinkels der Bilderfassungsvorrichtung, die in dem Fahrzeug (V) so vorgesehen ist, dass sie nach vorne oder nach hinten weist, und einer Variation einer Höhe der anderen Bilderfassungsvorrichtung zu berechnen.

4. Vorrichtung (40) zur Erzeugung eines Bildes aus der Vogelperspektive, die Folgendes aufweist:
die Lageänderungsbestimmungsvorrichtung nach einem der Ansprüche 1 bis 3; und
eine Einheit (45) zur Erzeugung eines Bildes aus der Vogelperspektive,
die konfiguriert ist, um ein Bild (300) aus der Vogelperspektive zu erzeugen, welches erhalten wird durch Kombinieren einer Vielzahl von Umfangsbildern, die durch die Bilderfassungseinheit (41) erfasst wurden und
welche einer Augen- bzw. Blickpunktumwandlung unterworfen wurden, so dass ein Bild erhalten wird, in dem das Fahrzeug (V) von oben nach unten angesehen wird, wobei
die Einheit (45) zur Erzeugung eines Bildes aus der Vogelperspektive so konfiguriert ist, dass sie, wenn ein Bestimmungsergebnis der Lageänderungsbestimmungseinheit (44) anzeigt, dass eine Lage von mindestens einer der Bilderfassungsvorrichtungen sich verändert hat, die Umfangsbilder, welche durch die Bilderfassungseinheit (41) erfasst wurden, gemäß der Lageänderung der Bilderfassungsvorrichtung korrigiert und das Bild (300) aus der Vogelperspektive erzeugt.

5. System (10) zur Erzeugung eines Bildes aus der Vogelperspektive, welches Folgendes aufweist:
die Vorrichtung (40) zur Erzeugung eines Bildes aus der Vogelperspektive nach Anspruch 4; und
eine Bilderfassungsvorrichtung, die in dem Fahrzeug (V) angeordnet ist und welche einen Umfang bzw. eine Umgebung des Fahrzeugs (V) erfasst, und ein Umfangsbild an die Bilderfassungseinheit (41) liefert.

6. Lageänderungsbestimmungsverfahren, welches Folgendes aufweist:
einen Bilderfassungsschritt des Erfassens einer Vielzahl von Umfangsbildern, in welchen ein Umfang bzw. eine Umgebung eines Fahrzeugs (V) abgebildet ist, und zwar durch eine Vielzahl von Bilderfassungsvorrichtungen, die in dem Fahrzeug (V) nach vorne, nach hinten, nach links und nach rechts weisen; **gekennzeichnet durch**
einen Bestimmungsschritt des Bestimmens, ob eine Lage des Fahrzeugs (V) sich verändert hat, wobei
der Bestimmungsschritt Folgendes aufweist, Identifizieren von Schnittpunkten von geraden Linien als Fluchtpunkte (PA, PB), wobei die geraden Linien sich zu einer Tiefenrichtung in den Umfangsbildern erstrecken, Erfassen einer Variation eines Kippwinkels der Bilderfassungsvorrichtung entsprechend einer Differenz in einer Höhenrichtung zwischen den Fluchtpunkten (PA, PB), Berechnen einer Variation einer Höhe der Bilderfassungsvorrichtung durch Extrahieren eines Bewegungsvektors, der eine Änderung einer Position eines Merkmalpunktes in den Umfangsbildern ausdrückt, und Berechnen einer Variation eines Drehwinkels der Bilderfassungsvorrichtung basierend auf einer Variation eines Kippwinkels der anderen Bilderfassungsvorrichtung, die in eine andere Richtung weist, und einer Variation einer Höhe der anderen Bilderfassungsvorrichtung, um zu bestimmen, ob die Lage des Fahrzeugs (V) sich verändert hat, und zwar unter einer Bedingung, dass eine Lage von mindestens einer der Bilderfassungsvorrichtungen sich verändert hat, wobei eine Treffpunktposition, an welcher die geraden Linien sich treffen, der Fluchtpunkt (P) ist, an dem eine Vielzahl von aufgenommenen Objekten, die sich linear in einer Richtung parallel zu einer Kontaktbodenfläche erstrecken, mit welcher das Fahrzeug (V) in Kontakt ist, sich schneiden, wenn sie in den Umfangsbildern verlängert werden, und
wobei das abgebildete Objekt zumindest eines von Folgenden ist: eine Straßenmarkierung, ein auf einer Straße installiertes Element und ein Gebäude.

7. Programm, welches einen Computer veranlasst, als eine Lageänderungsbestimmungsvorrichtung zu arbeiten, wobei das Programm Folgendes aufweist:
einen Bilderfassungsschritt des Erfassens einer Vielzahl von Umfangsbildern, in welchen ein Umfang bzw. eine Umgebung eines Fahrzeugs (V) abgebildet ist, und zwar durch eine Vielzahl von Bilderfassungsvorrichtungen, die in dem Fahrzeug (V) nach vorne, nach hinten, nach links und nach rechts weisen; **gekennzeichnet durch**
einen Bestimmungsschritt des Bestimmens, ob eine Lage des Fahrzeugs (V) sich verändert hat, wobei
der Bestimmungsschritt Folgendes aufweist, Identifizieren von Schnittpunkten von geraden Linien als Fluchtpunkte (PA, PB), wobei die geraden Linien sich zu einer Tiefenrichtung in den Umfangsbildern erstrecken, Erfassen einer Variation eines Kippwinkels der Bilderfassungsvorrichtung entsprechend einer Differenz in einer Höhenrichtung zwischen den Fluchtpunkten (PA, PB), Berechnen einer Variation einer Höhe der Bilderfassungsvorrichtung durch Extrahieren eines Bewegungsvektors, der eine Änderung einer Position eines Merkmalpunktes in den Umfangsbildern ausdrückt, und Berechnen einer Variation eines Drehwinkels der Bilderfassungsvorrichtung basierend auf einer Variation eines Kippwinkels der anderen Bilderfassungsvorrichtung, die in eine andere Richtung weist, und einer Variation einer Höhe der anderen Bilderfassungsvorrichtung, um zu bestimmen, ob die Lage des Fahrzeugs (V) sich verändert hat, und zwar unter einer Bedingung, dass eine Lage von mindestens einer der Bilderfassungsvorrichtungen sich verändert hat, wobei eine Treffpunktposition, an welcher die geraden Linien sich treffen, der Fluchtpunkt (P) ist, an dem eine Vielzahl von aufgenommenen Objekten, die sich linear in einer Richtung parallel zu einer Kontaktbodenfläche erstrecken, mit welcher das Fahrzeug (V) in Kontakt ist, sich schneiden, wenn sie in den Umfangsbildern verlängert werden, und
wobei das abgebildete Objekt zumindest eines von Folgenden ist: eine Straßenmarkierung, ein auf einer Straße installiertes Element und ein Gebäude.
wobei das abgebildete Objekt zumindest eines von Folgenden ist: eine Straßenmarkierung, ein auf einer Straße installiertes Element und ein Gebäude.

## Revendications

1. Dispositif de détermination de modification de position comprenant :
une unité d'acquisition d'image (41) configuré pour acquérir une pluralité d'images périphériques dans lequel une périphérie d'un véhicule (V) est imagée par une pluralité de dispositifs d'imagerie qui sont prévus dirigés vers l'avant, l'arrière, la gauche et la droite dans le véhicule (V) ; **caractérisé par**
une unité de détermination de modification de position (44) configurée pour déterminer si une position du véhicule (V) a changé,
une unité de commande (43) configurée pour amener l'unité de détermination de modification de position (44) à identifier des intersections de lignes droites sous forme de points de fuite (PA, PB), les lignes droites s'étendant vers une direction de profondeur dans les images périphériques, pour acquérir un angle d'inclinaison du dispositif d'imagerie correspondant à une différence dans une direction de hauteur entre les points de fuite (PA, PB), pour calculer une variation d'une hauteur du dispositif d'imagerie en extrayant un vecteur de mouvement exprimant une modification de position d'un point caractéristique dans les images périphériques, et pour calculer une variation d'un angle de rotation du dispositif d'imagerie sur la base d'une variation d'un angle d'inclinaison de l'autre dispositif d'imagerie dirigé dans une direction différente et une variation d'une hauteur de l'autre dispositif d'imagerie, pour déterminer si la position du véhicule (V) a changé dans une situation telle qu'une position d'au moins les dispositifs d'imagerie a changé, dans lequel
un emplacement convergent au niveau duquel les lignes droites convergent est le point de fuite (P) au niveau duquel une pluralité d'objets imagés qui s'étendent linéairement dans une direction parallèle à une surface terrestre de contact avec laquelle le véhicule (V) est en contact se coupent lors de leurs extensions dans les images périphériques, et
l'objet imagé est au moins un objet parmi un marquage routier, un élément installé sur une route, et un immeuble.

2. Dispositif de détermination de modification de position selon la revendication 1, dans lequel
l'unité de détermination de modification de position (44) est configurée pour calculer une variation d'un angle de rotation du dispositif d'imagerie qui est prévu dirigé vers l'avant ou l'arrière du véhicule (V) sur la base d'une variation d'un angle d'inclinaison du dispositif d'imagerie qui est prévu dirigé vers la gauche ou la droite du véhicule (V) et d'une variation d'une hauteur de l'autre dispositif d'imagerie.

3. Dispositif de détermination de modification de position selon la revendication 1, dans lequel
l'unité de détermination de modification de position (44) est configurée pour calculer une variation d'un angle de rotation du dispositif d'imagerie qui est prévu dirigé vers la gauche ou la droite du véhicule (V) sur la base d'une variation d'un angle d'inclinaison du dispositif d'imagerie qui est prévu dirigé vers l'avant ou l'arrière du véhicule (V) et d'une variation d'une hauteur de l'autre dispositif d'imagerie.

4. Dispositif de génération d'image vue à vol d'oiseau (40) comprenant :
le dispositif de détermination de modification de posture selon l'une quelconque des revendications 1 à 3 ; et
une unité de génération d'image vue à vol d'oiseau (45) configurée pour générer une image vue à vol d'oiseau (300) obtenue en combinant une pluralité d'images périphériques acquises par l'unité d'acquisition d'image (41) soumise à une conversion de point de vue de sorte qu'une image montrant le véhicule (V) par au-dessus est obtenue, dans lequel
l'unité de génération d'image vue à vol d'oiseau (45) est configurée pour corriger, quand un résultat de la détermination de l'unité de détermination de la modification de position (44) indique que la position d'au moins un quelconque des dispositifs d'imagerie a changé, les images périphériques acquises par l'unité d'acquisition d'image (41) en fonction de la modification de position du dispositif d'imagerie, et pour générer l'image vue à vol d'oiseau (300).

5. Système de génération d'image vue à vol d'oiseau (10) comprenant :
le dispositif de génération d'image vue à vol d'oiseau (40) selon la revendication 4 ; et
un dispositif d'imagerie qui est agencé dans le véhicule (V) et qui image une périphérie du véhicule (V) et fournit une image périphérique à l'unité d'acquisition d'image (41).

6. Procédé de détermination de modification de position, comprenant :
une étape d'acquisition d'image d'acquisition d'une pluralité d'images périphériques dans lequel une périphérie d'un véhicule (V) est imagée par une pluralité de dispositifs d'imagerie qui sont prévus dirigés vers l'avant, l'arrière, la gauche et la droite dans le véhicule (V) ; **caractérisé par**
une étape de détermination de détermination de si une position du véhicule (V) a changé, dans lequel
l'étape de détermination comporte l'identification d'intersections de lignes droites sous forme de points de fuite (PA, PB), les lignes droites s'étendant vers une direction de profondeur dans les images périphériques, l'acquisition d'une variation d'un angle d'inclinaison du dispositif d'imagerie correspondant à une différence dans une direction de hauteur entre les points de fuite (PA, PB), le calcul d'une variation d'une hauteur du dispositif d'imagerie en extrayant un vecteur de mouvement exprimant une modification de position d'un point caractéristique dans les images périphériques, et le calcul d'une variation d'un angle de rotation du dispositif d'imagerie sur la base d'une variation d'un angle d'inclinaison de l'autre dispositif d'imagerie dirigé dans une direction différente et d'une variation d'une hauteur de l'autre dispositif d'imagerie, pour déterminer si la position du véhicule (V) a changé dans une situation telle qu'une position d'au moins un quelconque des dispositifs d'imagerie a changé, un emplacement convergent au niveau duquel les lignes droites convergent est le point de fuite (P) au niveau duquel une pluralité d'objets imagés qui s'étendent linéairement dans une direction parallèle à une surface terrestre de contact avec laquelle le véhicule (V) est en contact se coupent lors de leurs extensions dans les images périphériques, et
l'objet imagé est au moins un objet parmi un marquage routier, un élément installé sur une route, et un immeuble.

7. Programme qui amène un ordinateur à fonctionner en tant que dispositif de détermination de modification de position, le programme comprenant :
une étape d'acquisition d'image d'acquisition d'une pluralité d'images périphériques dans lequel une périphérie d'un véhicule (V) est imagée par une pluralité de dispositifs d'imagerie qui sont prévus dirigés vers l'avant, l'arrière, la gauche et la droite dans le véhicule (V) ; **caractérisé par**
une étape de détermination de détermination de si une position du véhicule (V) a changé, dans lequel
l'étape de détermination comporte l'identification d'intersections de lignes droites sous forme de points de fuite (PA, PB), les lignes droites s'étendant vers une direction de profondeur dans les images périphériques, l'acquisition d'une variation d'un angle d'inclinaison du dispositif d'imagerie correspondant à une différence dans une direction de hauteur entre les points de fuite (PA, PB), le calcul d'une variation d'une hauteur du dispositif d'imagerie en extrayant un vecteur de mouvement exprimant une modification de position d'un point caractéristique dans les images périphériques, et le calcul d'une variation d'un angle de rotation du dispositif d'imagerie sur la base d'une variation d'un angle d'inclinaison de l'autre dispositif d'imagerie dirigé dans une direction différente et d'une variation d'une hauteur de l'autre dispositif d'imagerie, pour déterminer si la position du véhicule (V) a changé dans une situation telle qu'une position d'au moins un quelconque des dispositifs d'imagerie a changé,
un emplacement convergent au niveau duquel les lignes droites convergent est le point de fuite (P) au niveau duquel une pluralité d'objets imagés qui s'étendent linéairement dans une direction parallèle à une surface terrestre de contact avec laquelle le véhicule (V) est en contact se coupent lors de leurs extensions dans les images périphériques, et
l'objet imagé est au moins un objet parmi un marquage routier, un élément installé sur une route, et un immeuble.
